# EUROPÄISCHE PATENTSCHRIFT

(11) **EP 1 103 371 B1**
(45) Veröffentlichungstag und Bekanntmachung des Hinweises auf die Patenterteilung: **14.12.2005**
(21) Anmeldenummer: 00120758.8
(22) Anmeldetag: 22.09.2000
(51) Int. Cl.: B32B 27/40, A47C 7/18

(54) **Formkörper aus Polyurethan und Verfahren zu seiner Herstellung**
Moulded bodies of cellular polyurethane and a process for their preparation
Corps moulés cellulaires en polyuréthane et procédé pour leur préparation

(30) Priorität: 29.11.1999 DE 19957397
(43) Veröffentlichungstag der Anmeldung: 30.05.2001
(73) Patentinhaber: TechnoGel GmbH & Co. KG, 37115 Duderstadt (DE)
(72) Erfinder: Gansen, Peter, Dr., 37136 Seeburg (DE); Losio, Massimo, Dr., MC-98011 (MC)
(74) Vertreter: Gramm, Werner

(56) Entgegenhaltungen:
- AU-B- 747 131
- DE-U- 8 707 337
- FR-A- 2 778 097
- PATENT ABSTRACTS OF JAPAN vol. 016, no. 277 (C-0954), 22. Juni 1992 (1992-06-22) & JP 04 073011 A (FRANCE BED CO LTD), 9. März 1992 (1992-03-09)

## Beschreibung

Die Erfindung betrifft einen Formkörper aus Polyurethan, insbesondere ein Sitzkissen, und ein Verfahren zu seiner Herstellung. Das Verfahren zur Herstellung des Formkörpers umfasst mehrere Alternativen im Rahmen eines Formgußverfahrens.

Polyurethane werden in verschiedenen Morphologien eingesetzt, die jeweils ihre Anwendungsgebiete gefunden haben. Der Einsatz von Polyurethan-Schaumstoff ist beispielsweise für Polstermöbelteile, Sitze, insbesondere Autositze, und für Sitzkissen bekannt. Dieser Werkstoff wird, wenn er im Sitzbereich verwendet wird, als Formteil oder aus Blöcken geschnitten eingesetzt.

Im Automobilbereich beispielsweise werden zur Zeit mehr als 80% aller Fahrzeuge mit Sitzkissen aus Polyurethan-Schaumstoff ausgerüstet. Das Komfortverhalten dieser Sitzkissen wird zuweilen negativ bewertet.

Ebenso sind Gele aus Polyurethan für den Einsatz als Sitzkissen bekannt.

Das Patent EP 57838 beansprucht Gele zur Vermeidung von Dekubitus, welche durch eine niedrige Kennzahl, d.h. durch sogenannte Untervernetzung, gekennzeichnet sind. Sie werden durch die Umsetzung eines Polyisocyanats mit langkettigen Polyolen, die frei von kurzkettigen Anteilen sein sollen, hergestellt. Diese formstabilen Gele aus Polyurethan-Rohstoffen können als Matratzen, Matratzeneinlagen, Automobilsitze und Polstermöbel zum Einsatz kommen.

Das Patent EP 511570 schützt verbesserte Gele aus Polyolen und Polyisocyanaten mit niedriger Kennzahl, die aus Gemischen von langkettigen und kurzkettigen Polyethern hergestellt werden. Als mögliche Anwendungen werden u.a. Polster in Schuhen, auf Fahrradsätteln und auf Sitzflächen, Auflagen zur Vermeidung und Verhinderung von Verletzungen, Gesichtsmasken und Abpolsterungen unter Pferdesätteln genannt.

Das hohe Gewicht sowie die hohe Wärmekapazität von Sitzkissen aus reinem Gel sind von Nachteil. Die hohe Wärmekapazität kann zu einem kalten Sitzgefühl führen, da Körperwärme zum Aufheizen eines kompletten Kissens aus Gel wahrnehmbar entzogen wird.

Weiterhin beschreibt die JP 04073011 A (France Bed Co. Ltd.) ein leichtes, verformbares Kissen, welches das Gefühl einer Wassermatratze vermitteln soll. Hierfür wird ein Schaumstoffkissen mit einem darin fein verteilt eingebetteten wasserabsorbierenden Harz auslaufsicher ausgestattet und mit Wasser so befüllt, dass das Wasser von den Harzteilchen absorbiert wird. Auf diese Weise wird das Wasser innerhalb eines Hydrogels in dem Schaumstoff fixiert. Ein solches "Wassermatratzengefühl" ist nur für bestimmte Anwendungen gewünscht.

Die AU 147131 B beschreibt ein Stuhl-Sitzkissen mit einem Sitzteil, das auf einer Stuhlunterlage einen vorderen unterstützenden Bereich mit geringerem Verformungswiderstand und einen hinteren stützenden Bereich mit höherem Verformungswiderstand aufweist. Beide Bereiche sind aus Polyurethanschaumstoff und können verbunden, verklebt oder als getrennte Kissen auf der Unterlage aufliegen. An dem Sitzelement können weitere Schichten vorhanden sein, z.B. eine Zwischenschicht zwischen Schaumstoffschicht und Stuhlunterlage und/oder eine Deckschicht oberhalb der Schaumstoffschicht aus vorderem und hinterem Bereich. Hierbei handelt es sich jeweils um einzelne, getrennt gefertigte Schichten, die mit dem Schaumstoff zu einem Sitz zusammengesetzt werden. Es kann sich unter anderem um Schichten aus Polyurethangelmaterial handeln, das in eine dünne Schutzschicht aus PU-Film eingeschlossen ist. Insbesondere die Deckschicht gleicht die unterschiedlichen Schaumstoffbereiche bezüglich des Sitzkomforts nur in gewissen Grenzen aus.

Die Aufgabe der Erfindung besteht nun darin, die vorgenannten Nachteile im Stande der Technik zu überwinden und insbesondere gute Feder- und Dämpfungseigenschaften des Formteils in Belastungsrichtung mit einem angenehmen Sitzkomfort zu verbinden.

Zur Lösung dieser Aufgabe sieht die Erfindung einen Formkörper aus Polyurethan vor, der sich aus wenigstens zwei unterschiedlichen Polyurethanmaterialien zusammensetzt, nämlich aus wenigstens einem Polyurethan-Gel und wenigstens einem Polyurethan-Schaum, die in wenigstens zwei verschiedenen räumlichen Bereichen des Formkörpers angeordnet sind, wobei wenigstens eine Gelschicht wenigstens teilweise von Schaumstoff umschlossen ist oder wenigstens ein Schaumstoffblock innerhalb einer mit Gel ausgefüllten Form eingebettet vorliegt und die Materialien durch die impliziten Klebeeigenschaften während der Herstellung des Urethans verbunden sind.

Der Formkörper kann in einem Formgußverfahren in einer üblichen Form, wie sie auch in der Schaumstoffherstellung verwendet wird, hergestellt werden. Das in dem erfindungsgemäßen Formkörper zusammengefasste Verbundmaterial verbindet in optimaler Weise die Feder- bzw. Dämpfungseigenschaften der Einzelmaterialien, so dass sich ein erheblicher Fortschritt bezüglich des Sitzkomforts ergibt. Verschiedene, z.B. auch mehrschichtige Anordnungen der verschiedenen Materialien sind möglich. Auch bereichsweise unterschiedliche Anordnungen, wobei beispielsweise das eine Material nur im Bereich des Sitzspiegels angeordnet wird, können je nach den gewünschten Eigenschaften vorteilhaft ausgewählt und angewendet werden.

Vorzugsweise umfasst der Formkörper eine äußere Abdeckschicht, die Insbesondere für das Polyurethan-Gel undurchlässig ist.

Die Abdeckschicht kann aus einer Folie, insbesondere einer Polyurethanfolie, einer Polyvinylchloridfolie oder aus Leder oder einem textilen Material, wie z.B. einem Mikrofasermaterial bestehen. Grundsätzlich kommen als Folienmaterial verschiedene dehnfähige Stoffe in Frage.

In einer Ausführungsform der Erfindung werden der Polyurethan-Schaumstoff und das Polyurethan-Gel in wenigstens zwei Schichten übereinander angeordnet, so dass der Schaumstoff und das Gel übereinander geschichtet insgesamt als Feder- bzw. Dämpfungselement gegenüber einer Belastung in Querrichtung wirken.

Generell ist eine Gelschicht wenigstens teilweise von Schaumstoff umschlossen oder ein Schaumstoffblock wenigstens teilweise von einem Gel umschlossen.

In Weiterbildung der Erfindung ist der Formkörper als Sitzkissen ausgebildet, wobei vorzugsweise wenigstens auf der sitzspiegelseitigen Seite zusätzlich eine textile Deckschicht vorhanden ist. Dies gilt insbesondere dann, wenn beim Hinterschäumen eine Folie verwendet wurde. In diesem Fall wird das Kissen üblicherweise später bezogen.

Werden bei dieser Ausführungsform der Erfindung außen Textilien eingesetzt, sollten sie zur Gelseite vakuumdicht verschlossen sein. Die Verwendung eines textilen Deckmaterials direkt als Abdeckschicht ist bei einfachen, gröberen Textilien deshalb nicht möglich, da ein Eindringen des noch flüssigen Gelmaterials in das Textil verhindert werden sollte. Zur Hinterlegung eines textilen Abdeckmaterials können beispielsweise Folien aus thermoplastischem Polyurethan oder geschlossenzelligem, geschnittenem Polyurethan-Schaumstoff verwendet werden.

Zur Herstellung des Polyurethan-Schaumstoffes werden die üblichen Polyole und Polyisocyanate miteinander zur Reaktion gebracht. Die Verarbeitungstechnik und die typischen Rohstoffe finden sich beispielsweise in dem "Polyurethane Handbook", herausgegeben von G. Oertel.

Zur Herstellung der Gele können Rohstoffe eingesetzt werden, wie sie in den Europäischen Patenten EP 57838 und EP 511570 beschrieben werden.

Das erfindungsgemäße Verfahren zur Herstellung eines Formkörpers aus Polyurethan ist dadurch gekennzeichnet, dass in einem Formgußverfahren ein Formkörper aus einer Polyurethan-Gelmasse und einem schaumfähigen Polyurethan-Reaktionsgemisch hergestellt wird und wenigstens eine Gelschicht wenigstens teilweise von Schaumstoff umschlossen wird oder wenigstens ein Schaumstoffblock in eine mit Gelmasse ausgefüllt Form eingelegt wird, wobei sich die beiden Massen beim Aufschäumen und Aushärten miteinander verbinden.

Besonders vorteilhaft wirkt sich auf den hergestellten Formkörper die Tatsache aus, dass die Sandwich-Konstruktion aus zwei verschiedenen Polyurethanen die Klebeeigenschaften dieses Werkstoffes optimal ausnutzt.

Die Materialien werden vorzugsweise auf eine Abdeckschicht aufgegossen, die in das Formwerkzeug eingelegt wurde oder die Abdeckschicht wird dem fertigen Verbundmaterial aufgelegt.

Wenn gewünscht, können die hergestellten Formkörper anschließend noch mit einem weiteren Material bezogen werden.

In einer Ausführungsform kann das Verfahren so geführt sein, dass in eine mit einer Abdeckschicht ausgekleidete Form ein frisch hergestelltes Gemisch aus Polyol und Polyisocyanat als Gelmasse eingetragen wird, dass anschließend ein Polyurethan-Rohstoffgemisch für die Schaumherstellung auf die Gelschicht aufgebracht wird und dass Bedingungen für das Aufschäumen und die Aushärtung der Massen in der Form eingehalten werden.

Gemäß einer weiteren Ausführungsform des Verfahrens kann eine vorgefertigte Gelschicht in die vorzugsweise mit einer Abdeckschicht ausgelegte Form eingebracht werden, wonach ein Polyurethan-Rohstoffgemisch für die Schaumstoffherstellung aufgebracht wird und anschließend Bedingungen für das Aufschäumen und Aushärten des Formkörpers in üblicher Weise - d.h. eine bestimmte Verweilzeit bei einem bestimmten Temperaturprofil - eingehalten werden.

Die vorgefertigte Gelschicht kann beispielsweise entweder auf den Formboden aufgelegt oder am Formdeckel befestigt werden.

In weiterer alternativer Ausführungsform kann auch ein vorgefertigter Schaumstoffblock in die Form eingelegt werden, wonach die Form mit einer Gelmasse ausgefüllt wird und die Reaktionsbedingungen für die Herstellung des Polyurethan-Gels aus der Gelmasse eingehalten werden.

Vorzugsweise wird das Polyurethan-Gel aus Rohstoffen hergestellt, bei denen das Produkt aus Isocyanatfunktionalität und Funktionalität der Polyolkomponente mindestens 5,2, vorzugsweise mindestens 6,5, weiter vorzugsweise mindestens 7,5 beträgt.

In bevorzugten Ausführungsformen besteht die Polyolkomponente zur Herstellung des Gels aus einem Gemisch aus
a) einem oder mehreren Polyolen mit Hydroxylzahlen unter 112 und
b) einem oder mehreren Polyolen mit Hydroxylzahlen im Bereich 112 bis 600, wobei das Gewichtsverhältnis der Komponente a) zur Komponente b) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt.

In einem weiteren spezifischen Ausführungsbeispiel bestehen die Rohstoffe zur Herstellung des Gels aus
a) einem oder mehreren Polyisocyanaten und
b) einer Polyolkomponente, bestehend aus
   - einem oder mehreren Polyolen (b₁) mit Hydroxylzahlen unter 112 und
   - einem oder mehreren Polyolen (b₂) mit Hydroxylzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhältnis der Komponente (b₁) zu Komponente (b₂) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt, bestehen.

Vorzugsweise besteht die Polyolkomponente zur Hestellung des Gels aus einem oder mehreren Polyolen mit einem Molekulargewicht zwischen 1.000 und 12.000 und einer OH-Zahl zwischen 20 und 112, wobei das Produkt der Funktionalitäten der polyurethanbildenden Komponenten mindestens 5,2 beträgt und die Isocyanatkennzahl zwischen 15 und 60 liegt.

Als Isocyanate kann man für die Gelherstellung vorzugsweise solche der Formel Q(NCO)ₙ einsetzen, wobei n für 2 bis 4 steht und Q einen aliphatischen Kohlenwasserstoffrest mit 8 bis 18 C-Atomen, einen cycloaliphatischen Kohlenwasserstoffrest mit 4 bis 15 C-Atomen, einen aromatischen Kohlenwasserstoffrest mit 8 bis 15 C-Atomen bedeutet. Die Isocyanate können in reiner oder in Form der üblichen Isocyanat-Modifizierungen wie Urethanisierung, Allophanatisierung oder Biuretisierung eingesetzt werden.

Nachfolgend wird die Erfindung anhand von Ausführungsbeispielen näher beschrieben, die die möglichen Ausführungsformen besser verdeutlichen sollen.

In einer Ausführungsform der Erfindung wird eine Folie oder ein Textil, welches mit einer vakuumdichten Folie versehen ist, in eine Sitzform tiefgezogen. Die Unterseite der Form stellt später den Sitzspiegel des Kissens dar. Danach wird ein frisch hergestelltes Gemisch aus Polyol und Polyisocyanat flüssig in diese Form eingetragen. Diese Gelausgangsmaterialien bedecken nach dem Befüllen ganz oder teilweise den Sitzspiegel. Nachdem diese Mischung vollständig oder teilweise zu einem Polyurethan-Gel reagiert hat, wird im nächsten Schritt eine flüssige oder vorgeschäumte Mischung von Polyurethan-Rohstoffen zur Formschaumherstellung in die Form eingebracht. Das Gemisch schäumt auf, der Deckel der Form wird eingeschlossen und nach der Aushärtezeit von üblicherweise zwischen einer bis 10 Minuten wird das komplette Sitzkissen der Form entnommen.

In einer weiteren Ausführungsform der Erfindung wird das Polyurethan-Gel separat hergestellt und als formstabiles Gel in einem Stück oder in Abschnitten in die Form gelegt. Das Gel wird auf der Folie oder auf dem kaschierten Textil positioniert. Nach dem Aufschäumen in der Form wird das Gel an definierten Stellen des Sitzspiegels durch den Polyurethan-Schaumstoff fixiert. So kann das Gel gezielt den Komfort verbessern. In dieser Ausführungsform ist es auch möglich, ein Gelkissen auf dem Formendeckel zu positionieren. Dadurch befindet es sich nach dem Aufschäumen unten. Hierbei lässt sich das Einsitzgefühl in einen Schaumstoff mit den druckverteilenden Eigenschaften des Polyurethangels vorteilhaft verbinden.

In einer dritten Ausführungsform dieser Erfindung wird ein geschnittener Polyurethan-Schaumstoff mit dem Gel durch das regierende Gel miteinander in Verbindung gebracht. Dies geschieht beispielsweise dadurch, dass das Gel auf eine tiefgezogene Folie oder ein vakuumdichtes Textil gegossen wird und danach auf das nicht vollständig ausreagierte Gel der Schaumstoff aufgelegt wird. Bei Ausreaktion entsteht die innige Verbindung von Gel und Schaumstoff.

## Patentansprüche

1. Formkörper aus Polyurethan, der sich aus wenigstens zwei unterschiedlichen Polyurethanmaterialien zusammensetzt und ein Polyurethan-Gel und einen Polyurethan-Schaum enthält, **dadurch gekennzeichnet, dass** ein Polyurethan-Gel und ein Polyurethan-Schaum in wenigstens zwei verschiedenen räumlichen Bereichen des Formkörpers angeordnet sind und wenigstens eine Gelschicht wenigstens teilweise von Schaumstoff umschlossen ist oder wenigstens ein Schaumstoffblock innerhalb einer mit Gel ausgefüllten Form eingebettet vorliegt, wobei die Materialien durch die impliziten Klebeeigenschaften während der Herstellung des Urethans verbunden sind.

2. Formkörper nach Anspruch 1, **dadurch gekennzeichnet, dass** der Formkörper eine äußere Abdeckschicht umfasst, die insbesondere für das Polyurethan-Gel undurchlässig ist.

3. Formkörper nach Anspruch 1 oder 2, **dadurch gekennzeichnet, dass** die Abdeckschicht aus einer Folie, insbesondere eine Polyurethanfolie, einer Polyvinylehloridfolie oder aus Leder oder einem textilen Material, insbesondere einem Mikrofasermaterial besteht.

4. Formkörper nach einem der Ansprüche 1 bis 3, **dadurch gekennzeichnet, dass** der Formkörper ein Sitzkissen ist.

5. Formkörper nach Anspruch 4, **dadurch gekennzeichnet, dass** auf dem Sitzkissen wenigstens auf der sitzspiegelseitigen Seite zusätzlich eine textile Deckschicht vorhanden ist.

6. Verfahren zur Herstellung eines Formkörpers aus Polyurethan, insbesondere nach einem der Ansprüche 1 bis 7, **dadurch gekennzeichnet, dass** in einem Formgussverfahren ein Formkörper aus einer Polyurethan-Gelmasse und einem schaumfähigen Polyurethan-Reaktionsgemisch hergestellt wird und wenigstens eine Geischicht wenigstens teilweise von Schaumstoff umschlossen wird oder wenigstens ein Schaumstoffblock in eine mit Gelmasse ausgefüllte Form eingelegt wird, wobei sich die beiden Massen beim Aufschäumen und Aushärten miteinander verbinden.

7. Verfahren nach Anspruch 6, **dadurch gekennzeichnet, dass** die Materialien auf eine Abdeckschicht, vorzugsweise eine Folie, aufgegossen werden oder dass diese Abdeckschicht dem Verbundmaterial aufgelegt wird.

8. Verfahren nach Anspruch 6 oder 7, **dadurch gekennzeichnet, dass** in eine mit einer Abdeckschicht ausgekleidete Form ein frisch hergestelltes Gemisch aus Polyol und Polyisocyanat als Gelmasse eingetragen wird, dass anschließend ein Polyurethan-Rohstoffgemisch für die Schaumstoffherstellung auf die Gelschicht aufgebracht wird, und dass Bedingungen für das Aufschäumen und die Aushärtung der Massen in der Form eingehalten werden.

9. Verfahren nach Anspruch 6 oder 7, **dadurch gekennzeichnet, dass** eine vorgefertigte Gelschicht in die vorzugsweise mit einer Abdeckschicht ausgelegte Form eingebracht wird, dass danach ein Polyurethan-Rohstoffgemisch für die Schaumstoffherstellung aufgebracht wird und anschließend Bedingungen für das Aufschäumen und Aushärten des Formkörpers eingehalten werden.

10. Verfahren nach Anspruch 9, **dadurch gekennzeichnet, dass** die vorgefertigte Gelschicht entweder auf den Formboden aufgelegt oder am Formdeckel befestigt wird.

11. Verfahren nach Anspruch 6 oder 7, **dadurch gekennzeichnet, dass** ein vorgefertigter Schaumstoffblock in die Form eingelegt wird, dass die Form mit einer Gelmasse ausgefüllt wird und dass die Reaktionsbedingungen für die Herstellung des Polyurethangels aus der Gelmasse eingehalten werden.

12. Verfahren nach einem der Ansprüche 6 bis 11, **dadurch gekennzeichnet, dass** die Polyolkomponente zur Herstellung des Gels aus einem Gemisch aus
a) einem oder mehreren Polyolen mit Hydroxylzahlen unter 112
und
b) einem oder mehreren Polyolen mit Hydroxylzahlen im Bereich 112 bis 600 besteht, wobei das Gewichtsverhältnis der Komponente a) zu Komponente b) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt.

13. Verfahren nach einem der Ansprüche 6 bis 12, **dadurch gekennzeichnet, dass** die Rohstoffe zur Herstellung des Gels aus
a) einem oder mehreren Polyisocyanaten und
b) einer Polyolkomponente, bestehend aus
- einem oder mehreren Polyolen (b₁) mit Hydroxylzahlen unter 112 und
- einem oder mehreren Polyolen (b₂) mit Hydroxylzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhältnis der Komponente (b₁) zu Komponente (b₂) zwischen 90:10 und 10:90 liegt, die Isocyanat-Kennzahl des Reaktionsgemisches im Bereich von 15 bis 59,81 liegt und das Produkt aus Isocyanat-Funktionalität der Polyolkomponente mindestens 6,15 beträgt, bestehen.

14. Verfahren nach einem der Ansprüche 6 bis 13, **dadurch gekennzeichnet, dass** die Polyolkomponente zur Herstellung des Gels aus einem oder mehreren Polyolen mit einem Molekulargewicht zwischen 1000 und 12000 und einer OH-Zahl zwischen 20 und 112 besteht, wobei das Produkt der Funktionalitäten der polyurethanbildenden Komponenten mindestens 5,2 beträgt und die Isocyanat-Kennzahl zwischen 15 und 60 liegt.

15. Verfahren nach einem der Ansprüche 6 bis 14, **dadurch gekennzeichnet, dass** man als Isocyanate zur Gelherstellung solche der Formel
Q(NCO)ₙ
einsetzt, in der n für 2 bis 4 steht und Q einen aliphatischen Kohlenwasserstoffrest mit 8 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einem araliphatischen Kohlenwasserstoffrest mit 8 bis 15 C-Atomen bedeutet, wobei die Isocyanate in reiner oder in Form der üblichen Isocyanat-Modifizierungen wie Urethanisierung, Alophanatisierung oder Biuretisierung eingesetzt werden können.

## Claims

1. Polyurethane moulding which is composed of at least two different polyurethane materials and contains a polyurethane gel and a polyurethane foam, **characterized in that** a polyurethane gel and a polyurethane foam are arranged in at least two different spatial regions of the moulding and at least one gel layer is at least partly enclosed by foam or at least one foam block is present embedded within a gel-filled mould, the materials being united by the implicit adhesive properties during the preparation of the urethane.

2. Moulding according to Claim 1, **characterized in that** the moulding comprises an outer covering layer which in particular is impermeable to the polyurethane gel.

3. Moulding according to Claim 1 or 2, **characterized in that** the covering layer consists of a film, in particular a polyurethane film or a polyvinyl chloride film, or of leather or a textile material, in particular a microfibre material.

4. Moulding according to any of Claims 1 to 3, **characterized in that** the moulding is a seat cushion.

5. Moulding according to Claim 4, **characterized in that** a textile top layer is additionally present on the seat cushion, at least on the seat panel side.

6. Process for the production of a polyurethane moulding, in particular according to any of Claims 1 to 7, **characterized in that** a moulding is produced from a polyurethane gel material and a foamable polyurethane reaction mixture in a casting process and at least one gel layer is at least partly enclosed by foam or at least one foam block is inserted into a mould filled with gel material, the two materials uniting with one another on foaming and curing.

7. Process according to Claim 6, **characterized in that** the materials are cast onto a covering layer, preferably a film, or **in that** this covering layer is placed on the composite material.

8. Process according to Claim 6 or 7, **characterized in that** a freshly prepared mixture of polyol and polyisocyanate is introduced as gel material into a mould lined with a covering layer, **in that** a polyurethane raw material mixture for foam production is then applied to the gel layer, and **in that** conditions for foaming and curing of the materials in the mould are maintained.

9. Process according to Claim 6 or 7, **characterized in that** a preproduced gel layer is introduced into the mould preferably lined with a covering layer, and **in that** a polyurethane raw material mixture for foam production is then applied and conditions for foaming and curing of the moulding are then maintained.

10. Process according to Claim 9, **characterized in that** the preproduced gel layer is placed on the bottom of the mould or fastened to the mould cover.

11. Process according to Claim 6 or 7, **characterized in that** a preproduced foam block is inserted into the mould, **in that** the mould is filled with a gel material, and **in that** the reaction conditions for the preparation of the polyurethane from the gel mass are maintained.

12. Process according to any of Claims 6 to 11, **characterized in that** the polyol component for the preparation of the gel consists of a mixture of
a) one or more polyols having hydroxyl numbers of less than 112
and
b) one or more polyols having hydroxyl numbers in the range from 112 to 600, the weight ratio of component a) to component b) being between 90:10 and 10:90, the isocyanate index of the reaction mixture being in the range from 15 to 59.81 and the product of isocyanate functionality and functionality of the polyol component being at least 6.15.

13. Process according to any of Claims 6 to 12, **characterized in that** the raw materials for the preparation of the gel consist of
a) one or more polyisocyanates and
b) a polyol component consisting of
- one or more polyols (b₁) having hydroxyl numbers of less than 112 and
- one or more polyols (b₂) having hydroxyl numbers in the range from 112 to 600 and
c) optionally a catalyst for the reaction between isocyanate groups and hydroxyl groups and
d) optionally fillers and/or additives known per se from polyurethane chemistry,
the weight ratio of component (b₁) to component (b₂) being between 10:90 and 90:10, the isocyanate index of the reaction mixture being in the range from 15 to 59.81 and the product of isocyanate functionality of the polyol component being at least 6.15.

14. Process according to any of Claims 6 to 13, **characterized in that** the polyol component for the preparation of the gel consists of one or more polyols having a molecular weight of between 1000 and 12 000 and an OH number of between 20 and 112, the product of the functionalities of the polyurethane-forming components being at least 5.2 and the isocyanate index being between 15 and 60.

15. Process according to any of Claims 6 to 14, **characterized in that** the isocyanates used for the gel preparation are those of the formula
Q(NCO)ₙ
in which n represents 2 to 4 and Q denotes an aliphatic hydrocarbon radical having 8 to 18 C atoms, a cycloaliphatic hydrocarbon radical having 4 to 15 C atoms, an aromatic hydrocarbon radical having 6 to 15 C atoms or an araliphatic hydrocarbon radical having 8 to 15 C atoms, whereby the isocyanates can be used in pure form or in the form of the customary isocyanate modifications, such as urethanization, alophanatization or biuretization.

## Revendications

1. Corps de forme en polyuréthane, qui renferme au moins deux matières en polyuréthane distinctes et mélangées, un gel de polyuréthane et une mousse de polyuréthane, **caractérisé en ce qu'**un gel de polyuréthane et une mousse de polyuréthane sont disposés dans au moins deux zones différentes du corps de forme, et au moins une couche de gel est au moins en partie entourée de mousse ou au moins, un bloc de mousse est présent et enrobé à l'intérieur d'une forme remplie de gel, dans lequel les matières sont liées entre elles par les caractéristiques d'adhésion implicites durant la fabrication de l'uréthane.

2. Corps de forme selon la revendication 1, **caractérisé en ce que** le corps de forme comporte une couche extérieure de couverture qui est imperméable, notamment pour le gel de polyuréthane.

3. Corps de forme selon la revendication 1 ou 2, **caractérisé en ce que** la couche de couverture est constituée par une pellicule, en particulier une pellicule en polyuréthane, une pellicule de chlorure de polyvinyle, ou en cuir ou en matière textile en particulier, une matière en microfibres.

4. Corps de forme selon l'une des revendications 1 à 3, **caractérisé en ce que** le corps de forme est un coussin d'assise.

5. Corps de forme selon la revendication 4, **caractérisé en ce que** sur le coussin d'assise est présent au moins sur le côté opposé à l'assise du coussin une couche additionnelle de couverture en textile.

6. Procédé pour la fabrication d'un corps de forme en polyuréthane, en particulier, selon l'une des revendications 1 à 5, **caractérisé en ce que** on fabrique selon un procédé en moulage de forme un corps de forme à partir d'une masse de gel de polyuréthane et un mélange réactionnel susceptible de produire une mousse de polyuréthane et on entoure au moins, une couche de gel au moins en partie de mousse ou au moins un bloc de mousse qu'on introduit dans une forme remplie d'une masse de gel, dans lequel les deux masses se lient ensemble lors du moussage et du durcissement.

7. Procédé selon la revendication 6, **caractérisé en ce que** les matières sont déposées sur une couche de couverture de préférence une pellicule sur laquelle elles sont coulées ou que cette couche de couverture est déposée sur la matière de liaison.

8. Procédé selon l'une des revendications 6 ou 7, **caractérisé en ce que** dans une forme revêtue d'une couche extérieure, on introduit en tant que masse de gel, un mélange fraîchement préparé de polyol et polyisocyanate **en ce qu'**on applique ensuite sur la couche de gel un mélange brut de polyuréthane pour la préparation de la mousse et **en ce qu'**on maintient les conditions pour le moussage et le durcissement des masses dans la forme.

9. Procédé selon la revendication 6 ou 7, **caractérisé en ce qu'**on introduit une couche pré-préparée dans la forme qui est de préférence, recouverte d'une couche de couverture, **en ce que** ensuite, on applique un mélange de polyuréthane pour la préparation de la mousse, et ensuite, les conditions pour le moussage et le durcissement du corps de forme sont maintenues.

10. Procédé selon la revendication 9, **caractérisé en ce que** la couche de gel pré-préparée est appliquée soit sur le fond de la forme ou est fixée sur le couvercle de la forme.

11. Procédé selon la revendication 6 ou 7, **caractérisé en ce que** un bloc de mousse pré-préparé est introduit dans la forme, **en ce que** la forme est remplie d'une masse de gel, et **en ce que** les conditions de réaction pour la préparation du gel de polyuréthane, à partir de la masse de gel sont maintenues.

12. Procédé selon l'une des revendications 6 à 11, **caractérisé en ce que** les composants du polyol pour la préparation du gel sont constitués par un mélange de :
a) un ou plusieurs polyols ayant un nombre d'hydroxy < à 112 et
b) un ou plusieurs polyols ayant un nombre d'hydroxy dans l'intervalle de 112 à 600 dans lesquels le rapport pondéral du composé a) sur le composé b) est compris entre 90 / 10 et 10/90, le nombre caractéristique d'isocyanate du mélange réactionnel est compris dans l'intervalle de 15 à 59,81, et le produit des fonctions isocyanates et des fonctions polyols est d'au moins 6,15.

13. Procédé selon l'une des revendications 6 à 12, **caractérisé en ce que** les produits pour la préparation du gel sont constitués par :
a) un ou plusieurs poly isocyanates
b) un composant polyol constitué par :
- un ou plusieurs polyols (b₁) avec des nombre d'hydroxy < 112
- un ou plusieurs polyols (b₂) avec des nombres hydroxy compris entre 112 et 600 et
c) éventuellement un catalyseur pour la réaction entre les groupes isocyanates et hydroxy
d) éventuellement des produits d'addition ou de remplissage connus dans la chimie des polyuréthanes,
dans lequel le rapport pondéral des composés (b₁) sur les composés (b₂) est compris entre 90 :10 et 10 :90, le nombre caractéristique d'isocyanate du mélange réactionnel étant compris entre 15 et 59,81 et le produit des fonctions isocyanates du composé polyol est d'au moins 6,15.

14. Procédé selon l'une de revendications 6 à 13, **caractérisé en ce que** les composants de polyol pour la préparation du gel sont constitué par un ou plusieurs polyols de masse moléculaire comprise entre 1000 et 12 000 et un nombre d'OH compris entre 20 et 112 dans lequel le produit des fonctionnalités des composés formateurs de polyuréthane est d'au moins 5,2 et le nombre caractéristique d'isocyanate est compris entre 15 et 60.

15. Procédé selon l'une des revendications 6 à 14, **caractérisé en ce que** on introduit en tant qu'isocyanate pour la préparation du gel, un isocyanate de formule
Q(NCO)ₙ
dans laquelle n est compris entre 2 et 4 et Q est un reste d'hydrocarbure aliphatique ayant 8 à 18 atomes de carbone, un reste d'hydrocarbure cycloaliphatique ayant 4 à 15 atomes de carbones, un reste d'hydrocarbure aromatique ayant 6 à 15 atomes de carbones, ou un reste d'hydrocarbure araliphatique ayant de 8 à 15 atomes de carbones, les isocyanates pouvant être introduits sous une forme pure ou sous une forme d'isocyanate modifiée de façon classique telle que par uréthanisation, alophantisation ou biuréthisation.
